# EUROPEAN PATENT APPLICATION

(11) **EP 0 533 381 A2**
(43) Date of publication of application: **24.03.1993**
(21) Application number: 92308044.4
(22) Date of filing: 04.09.1992
(51) Int. Cl.: B01D 27/08

(54) **Filter units**

(30) Priority: 14.09.1991 GB 9119688
(71) Applicant: LUCAS INDUSTRIES PUBLIC LIMITED COMPANY, Solihull, West Midlands B91 3TX (GB)
(72) Inventor: Bradford, Peter Francis, Newton Gereen, Sudbury, Suffolk C010 0QL (GB)
(74) Representative: Thompson, George Michael

(57) **Abstract**

A screw-on filter unit has a casing (10) which includes an end wall (16) which is formed integrally with a side wall (15). A screw threaded aperture (18) is formed in the end wall so that the filter unit can be secured onto a mounting. The casing accommodates a filter element (11) and the open end of the casing is closed by a closure plate (17).

## Description

This invention relates to a so called screw on filter unit comprising a casing within which is located a filter element, a part of the casing defining a screw threaded aperture which in use is engaged with a complementarily screw threaded member of a mounting.

Such filter units are well known in the automotive field for filtering liquid fuel or lubricating oil. The known units comprise a cylindrical casing having an integral end closure at one end, the other end of the casing being closed once the filter element has been assembled therein, by an end closure plate. Conveniently a rolled joint is effected between the edge of the plate and the casing to secure the two parts together and the plate is provided with a central dished opening which defines screw threads for engagement by a hollow spigot member on the mounting. The mounting defines an inlet and an outlet and the plate defines one or more openings about the central opening, which communicates with either the outlet or the inlet in the mounting, the central opening communicating with either the inlet or the outlet in the mounting. The mounting or the plate carry at least two annular seals which are trapped when the casing is attached to the mounting, the seals preventing escape of liquid to the exterior of the unit and mixing of the liquid in the inlet and outlet respectively.

The closure plate is formed from material of a sufficient thickness so that it is sufficiently rigid to withstand the clamping forces which are exerted during the process of securing the casing to the mounting and the forces which are generated when the unit is in use. Moreover, the joint between the closure plate and the casing has to withstand in use, the fluid pressure within the casing and the mechanical forces which are generated due for example, to engine vibration. The construction of a satisfactory joint presents practical difficulties.

The object of the present invention is to provide a filter unit of the kind specified and a method of making same, in a simple and convenient form.

According to the invention in a filter unit of the kind specified said part comprises an end wall which is integrally formed with a side wall and there is secured to said side wall a separate closure plate.

According to a further feature of the invention a method of constructing a filter unit of the kind specified comprises working a billet of metal to form the side wall or walls and an integral end wall of the casing, said end wall having a thicker section than said side wall, forming a screw threaded aperture in said end wall whereby the filter unit can be mounted on a mounting, inserting the filter element within the casing, and forming a closure plate and securing the closure plate to the side wall.

Examples of filter unit in accordance with the invention will now be described with reference to the accompanying drawings in which:-
Figure 1 is a sectional view of a first example, and
Figure 2 is a similar view of a second example.

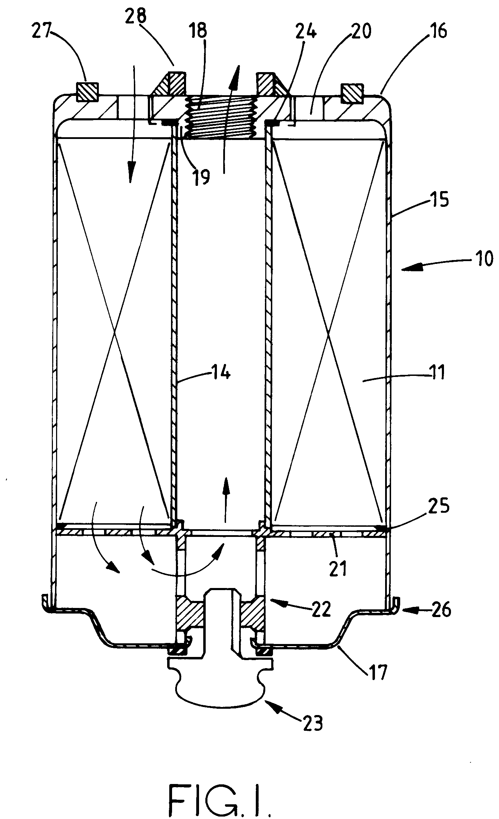

Referring to Figure 1 of the drawings the unit comprises a casing 10 within which is mounted an annular filter element 11, the filter element being constructed from lengths of filter paper secured together so that in section the element has a zig zag formation.

The filter element is located about a central tube 14.

The casing 10 is of cylindrical construction having a side wall 15, an integral end wall 16 at one end of the casing and a closure plate 17 at the opposite end of the casing. The end wall 16 is provided with a central screw threaded aperture 18 and within the casing with an annular lip 19 about which the tube 14 is located. The end closure also defines about the aperture 18, a row of further apertures 20.

The element 11 is supported within the casing by a support plate 21 which conveniently defines a location for the adjacent end of the tube and is also formed with a hollow component 22 a portion of which is of increased thickness to define a threaded aperture which receives the threaded portion of a drain plug 23. The component 22 is apertured so that fuel flow can take place in the direction indicated by the arrows, the fuel initially flowing through the apertures 20, and then through the filter element into the interior of the tube 14 by way of the apertures in the support plate 21 and the component 22. During such flow of fuel water will collect in the lower portion of the casing and this can be drained by removal of the plug 23.

In order to prevent the filter element being bypassed by fuel, a sealing member 24 is interposed between the end of the tube 14 and the end wall 16 and an adhesive joint is provided between the interior of the wall of the casing and the plate 21.

The end closure plate 17 is secured to the casing using a rolled joint 26.

The unit in use is secured to a mounting which has inlet and outlet passages and a spigot which is engaged in the aperture 18. The action of securing the unit to the mounting effects compression of a pair of annular seals 27, 28. The seal 27 is located in a groove formed in the end wall 16 and the seal 28 is secured as by adhesive to the wall.

In a first modification the side wall 15 of the casing terminates at the support plate 21 and the end closure is of cup shaped form and a rolled joint is again used to secure the end closure to the side wall of the casing. In this case the component 22 may be omitted and the drain plug engaged with a nut which is secured to the end closure prior to it being secured to the wall 15 of the casing.

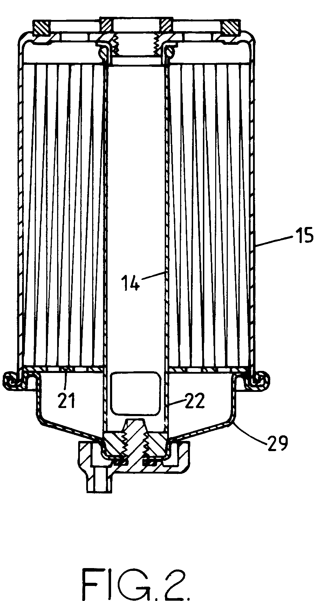

In a further modification as shown in Figure 2, the component 22 is formed as part of the tube 14 and the support plate 21 is supported at its periphery by a ledge formed by an end closure member 29 which in this case is of cup shaped form. Moreover, the sealing members 27, 28 may be carried on a plastics cage which is clipped to the end wall 16.

By the arrangement described the joint 26 although still subject to the internal pressure within the casing, is subject to less mechanical stress due to engine vibration etc. Moreover, the joint is formed by seeming together material of the same thickness as compared with the known types of filter unit. The production of the wall 15 of the casing with the integral end wall 16 can be effected by an extrusion process from a billet of suitable material. As will be seen the section diminishes gradually into the wall 15 of the casing to minimise stress formation. In producing the unit the extrusion process will be carried out and the various apertures and grooves machined in the end wall.
Following this the filter element together with the tube 14 and associated components are inserted into the casing and the end closure 17 secured in position.

## Claims

1. A screw-on filter unit comprising a casing (10) in which is located a filter element (11), a part of the casing defining a screw threaded aperture (18) which in use is engaged with a complementarily screw threaded member of a filter mounting characterised in that said part comprises an end wall (16) which is integrally formed with a side wall (15) and by a closure plate (17, 29) which is secured to said side wall to form the casing.

2. A filter unit according to Claim 1, characterised by a central tube (14) within the casing, said tube at one end being located about an annular lip (19) which is formed on the inner surface of said end wall (16).

3. A filter unit according to Claim 2, characterised in that the other end of the central tube (14) is located by a support plate (21) which provides support for the filter element (11) and is located inwardly of said closure plate (17) said support plate carrying a hollow component (22) which extends between the support plate (21) and the closure plate (17).

4. A filter unit according to Claim 3, characterised in that said hollow component (22) defines a threaded aperture to receive a drain plug (23).

5. A filter unit according to Claim 2, characterised in that said end closure (17) is of dished form and by the provision of a support plate (21) which provides support for the filter element, the support plate (21), the end closure (17) and the side wall (15) being secured together along a common joint line.

6. A filter unit according to Claim 2, characterised in that said central tube (14) is located at its other end within a recess defined in the end closure (29), said end closure being dished and defining an annular rim which provides support for a support plate (21) through which the tube (14) extends and which provides support for the filter element.

7. A method of making a screw-on filter unit comprising working a billet of metal to form an end wall (16) and an integral side wall (15) said end wall having a thicker section than the side wall, forming a screw threaded aperture (18) in said end wall whereby the filter unit can be mounted on a mounting, inserting a filter element (11) into the space defined within the side wall, forming a closure plate (17) and securing the closure plate to the side wall.
